# FASCICULE DE BREVET EUROPEEN

(11) **EP 3 740 685 B1**
(45) Date de publication et mention de la délivrance du brevet: **20.10.2021**
(21) Numéro de dépôt: 19700539.0
(22) Date de dépôt: 17.01.2019
(51) Int. Cl.: F04D 29/26, F16D 9/06

(54) **VENTILATEUR POUR UN GROUPE DE REFROIDISSEMENT D'AERONEF**
LÜFTER FÜR EINE FLUGZEUGKÜHLEINHEIT
FAN FOR AN AIRCRAFT COOLING UNIT

(30) Priorité: 19.01.2018 FR 1850421
(43) Date de publication de la demande: 25.11.2020
(73) Titulaire: Safran Electrical & Power, 31702 Blagnac Cedex (FR)
(72) Inventeur: DEL RIO, Fabien, 31702 BLAGNAC CEDEX (FR); SENTENAC, Nicolas, 31702 BLAGNAC CEDEX (FR); SALVADOR, René, 31702 BLAGNAC CEDEX (FR); GOESTCHEL, Jean-Yves, 31702 BLAGNAC CEDEX (FR)
(74) Mandataire: Gevers & Orès
(86) Numéro de dépôt international: PCT/EP2019/051189
(87) Numéro de publication internationale: WO 2019/141790

(56) Documents cités:
- WO-A1-2017/046490
- FR-A1- 3 029 996
- JP-A- H07 103 193

## Description

### DOMAINE TECHNIQUE

La présente invention concerne notamment un ventilateur, en particulier pour un groupe de refroidissement d'aéronef.

### ETAT DE L'ART

L'état de l'art comprend notamment le document WO-A1-2017/046490.

Les moteurs d'aéronefs sont équipés de groupes de refroidissement de fluides tels que d'huile par exemple. Un groupe de refroidissement d'huile de la technique actuelle comprend un échangeur air-huile et un ventilateur qui est destiné à aspirer de l'air à travers l'échangeur.

L'échangeur est en général de type « brique » et le ventilateur comprend une roue qui est disposée à côté de l'échangeur et qui aspire de l'air à travers lui afin que l'air prélève de l'énergie calorifique de l'huile circulant dans l'échangeur.

Le ventilateur est un ventilateur mécanique et sa roue est entraînée en rotation par une ligne d'arbre qui est reliée à un arbre de sortie d'une boîte d'engrenages ou à des moyens de prélèvement mécanique sur le moteur de l'aéronef.

Les motoristes et/ou les hélicoptéristes, peuvent exiger que, en cas de problème au niveau de la roue du ventilateur, tel qu'un blocage de la roue ou l'ingestion d'un corps étranger dans le ventilateur, l'augmentation du couple d'entraînement de la roue au-delà d'un certain seuil entraîne une casse maîtrisée d'une pièce afin de désaccoupler ou désolidariser en rotation la roue de ventilateur de l'arbre de sortie de la boîte d'engrenages ou des moyens de prélèvement mécanique sur le moteur.

Dans la technique actuelle, cette fonction de sécurité est prévue sur la ligne d'arbre d'entraînement de la roue du ventilateur. La ligne d'arbre comprend un tronçon présentant une partie fusible destinée à se rompre dans le cas où le couple transmis à la roue dépasse un certain seuil. Ce tronçon est alors appelé « arbre à casser » puisque c'est lui qui est destiné à se rompre dans le cas précité.

En plus de cet arbre à casser, la ligne d'arbre comprend plusieurs éléments (arbre principal, fourreau, roulements, flasque, rondelle de précharge, etc.) et est donc relativement complexe. L'arbre à casser forme une pièce intermédiaire qui entraîne un déport de la roue vis-à-vis de l'arbre de sortie et nécessite un guidage de la ligne d'arbre par des roulements et des pièces annexes. Bien que cette complexité ne soit pas exigée par le client, elle est nécessaire pour intégrer la fonction de sécurité. La ligne d'arbre est donc coûteuse et a une masse importante. Par ailleurs, la présence des roulements diminue la fiabilité et la durée de vie du ventilateur.

La Demanderesse a déjà proposé une solution à ce problème dans le document WO-A1-2017/046490. Ce document décrit un ventilateur comportant les caractéristiques du préambule de la revendication 1. Il propose notamment de prévoir la fonction de sécurité sur la roue de ventilateur plutôt que sur la ligne d'arbre d'entraînement de cette roue. La ligne d'arbre peut ainsi être simplifiée et être moins coûteuse et moins lourde que celle de la technique antérieure. Cela permet de réduire le coût du ventilateur mais également d'augmenter sa fiabilité. La roue de ventilateur intègre donc un élément fusible permettant de désaccoupler la roue de la ligne d'arbre lorsque le couple transmis par l'arbre ou la ligne d'arbre dépasse un seuil prédéterminé.

En fonctionnement, la vitesse de rotation de la roue peut être très importante et par exemple de l'ordre de 10 000 à 20 000 tours/minute. Après rupture de l'élément fusible, un échauffement très important se crée à cause des déplacements relatifs des pièces, ce qui peut entraîner leur grippage voire leur soudage et se traduire ainsi par une annulation du phénomène recherchée de désolidarisation de ces pièces.

### EXPOSE DE L'INVENTION

La présente invention propose une solution simple, efficace et économique à ce problème.

L'invention propose un ventilateur, en particulier pour un groupe de refroidissement d'aéronef, comportant :
- une roue comprenant un moyeu et une rangée annulaire de pales, une ligne d'arbre d'entraînement de la roue autour d'un axe, et
- des moyens de liaison fusible du moyeu de la roue à la ligne d'arbre, ces moyens de liaison fusible comportant une première douille de fixation traversée par la ligne d'arbre et entourée par ledit moyeu, et des éléments fusibles de sécurité qui s'étendent parallèlement audit axe et sont configurés pour se rompre et désolidariser en rotation la roue de la ligne d'arbre lorsqu'un couple d'entraînement de la roue transmis par ladite ligne d'arbre dépasse un certain seuil,
caractérisé en ce que lesdits moyens de liaison comprennent une seconde douille d'usure qui est intercalée entre ladite première douille et ledit moyeu et qui est traversée par lesdits éléments fusibles, ladite seconde douille étant réalisée dans un matériau différent de celui de la première douille et susceptible de s'user par frottement et/ou par échauffement dans le cas où la ligne d'arbre continuerait de tourner suite à la désolidarisation précitée.

L'invention propose ainsi d'ajouter une pièce d'usure aux moyens de liaison fusible, cette pièce d'usure étant configurée pour s'user en priorité dans le cas où la ligne d'arbre continuerait de tourner suite à une désolidarisation de la roue de cette ligne d'arbre. La pièce d'usure est une pièce intermédiaire ou intercalaire et évite donc de préférence un contact direct entre le moyeu et la douille de fixation, car c'est ce contact direct de pièces en général métalliques qui génère le problème d'échauffement de la technique antérieure. La douille d'usure est avantageusement configurée pour faciliter le glissement du moyeu de la roue vis-à-vis de la douille de fixation.

Le couple nominal à transmettre par l'élément fusible de la roue est de préférence compris entre 1 et 15 N.m. Le seuil de rupture peut représenter dix fois le couple nominal, et être de l'ordre de 10 à 150 N.m.

Le ventilateur selon l'invention peut comprendre une ou plusieurs des caractéristiques suivantes, prises isolément les unes des autres ou en combinaison les unes avec les autres :
- ladite seconde douille comprend une portion cylindrique et une portion radiale, la portion cylindrique de la seconde douille étant intercalée entre des portions cylindriques de la première douille et du moyeu, et la portion radiale de la seconde douille étant intercalée entre des portions radiales de la première douille et du moyeu,
- lesdits éléments fusibles sont des vis et assurent la fixation de la roue,
- les vis traversent axialement les portions radiales des première et seconde douilles et du moyeu,
- les vis traversent sensiblement sans jeu des orifices axiaux des portions radiales des première et seconde douilles et du moyeu,
- ladite première douille est maintenue serrée axialement contre un épaulement de la ligne d'arbre par un écrou vissé à une extrémité de la ligne d'arbre,
- ledit écrou prend appui axialement sur une rondelle qui prend elle-même appui axialement sur la portion cylindrique de la première douille, cette rondelle étant séparée par un jeu axial des portions cylindriques de la seconde douille et du moyeu,
- ladite première douille est en métal et ladite seconde douille est en matériau plastique.

L'invention concerne encore un groupe de refroidissement d'aéronef, comportant un échangeur de chaleur, par exemple air-huile, et un ventilateur tel que décrit ci-dessus.

L'invention concerne également un moteur ou une boîte d'engrenages pour un aéronef, tel qu'un hélicoptère, comportant un arbre de sortie et un groupe de refroidissement tel que décrit ci-dessus dont la roue est entraînée par ledit arbre de sortie.

La présente invention concerne enfin un aéronef, comportant au moins un groupe de refroidissement ou un moteur ou une boîte d'engrenages tel que décrit ci-dessus.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un moteur d'aéronef équipé d'un groupe de refroidissement,
- la figure 2 est une vue schématique en perspective du ventilateur du groupe de refroidissement de la figure 1,
- la figure 3 est une vue schématique partielle en coupe axiale du ventilateur de la figure 2, et représente la technique antérieure à la présente invention,
- la figure 4 est une vue schématique en coupe axiale d'un ventilateur selon l'invention, et
- la figure 5 est une vue à plus grande échelle d'une partie de la figure 4.

### DESCRIPTION DETAILLEE

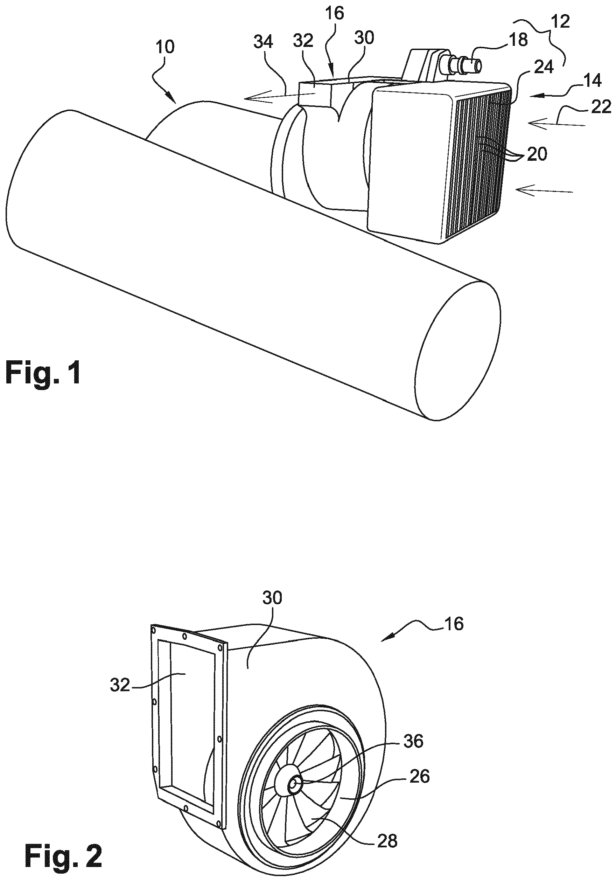

La figure 1 montre un moteur 10 d'aéronef, ici d'hélicoptère, qui est équipé d'un groupe de refroidissement 12 de l'huile du moteur. Le groupe 12 comporte un échangeur de chaleur air-huile 14 et un ventilateur 16 qui est mieux visible en figure 2.

L'échangeur de chaleur 14 est de type « brique » et a une forme parallélépipédique. Il comprend un circuit d'huile raccordé à des ports 18 d'alimentation et d'évacuation d'huile dont un seul est visible en figure 1. Il comprend en outre des ailettes 20 définissant des surfaces d'échange thermique avec un flux d'air traversant l'échangeur (flèche 22). La section frontale ou d'entrée 24 de l'échangeur a une forme de parallélogramme. La section de sortie (non visible) de l'échangeur est aussi de forme parallélogramme. Un tuyau de raccordement est monté entre la section de sortie de l'échangeur et la section d'aspiration ou d'entrée 26 du ventilateur et assure la communication fluidique entre ces sections.

Le ventilateur 16 est ici du type centrifuge et comprend une roue 28 qui est entraînée par une ligne d'arbre 36 pour forcer l'air à être aspiré à travers l'échangeur 14 et à balayer les ailettes 20. L'air aspiré passe à travers la roue et est expulsé radialement vers l'extérieur. Il est canalisé par un pavillon 29 du corps 30 du ventilateur qui forme une volute et s'étend depuis l'entrée 26 précitée jusqu'à la sortie d'air 32 qui a une orientation sensiblement tangentielle (flèche 34) par rapport à une circonférence centrée sur l'axe de rotation de la roue.

Comme on le voit à la figure 1, l'échangeur 14 et le ventilateur 16 sont disposés à côté l'un de l'autre. Le corps 30 du ventilateur est fixé sur un carter du moteur et l'échangeur 14 est en général fixé en porte-à-faux sur le ventilateur (ou directement sur le moteur ou la boîte d'engrenage).

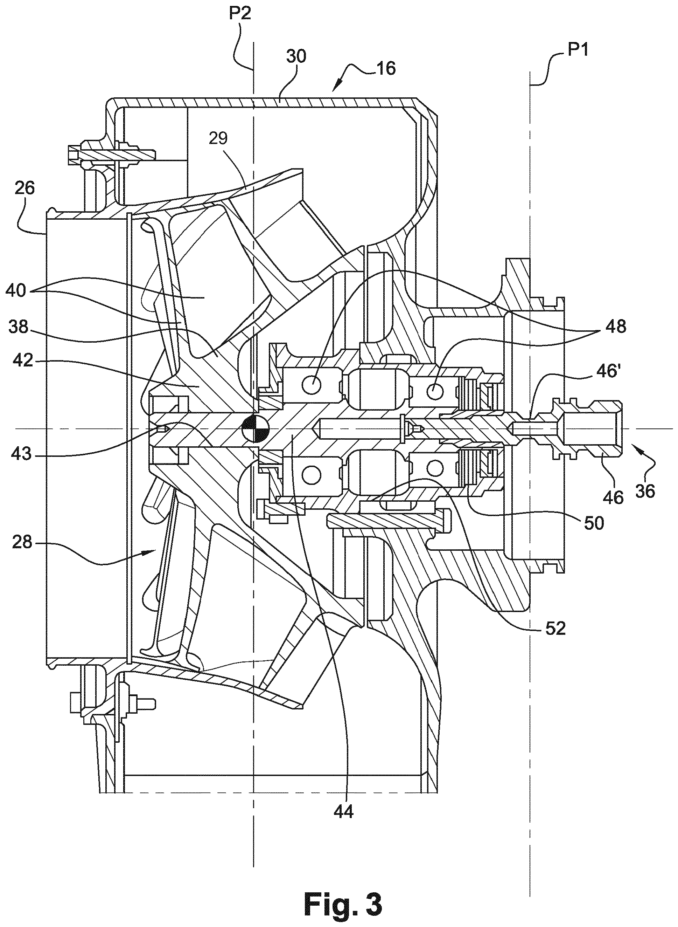

La roue 28 du ventilateur 16 et la ligne d'arbre 36 d'entraînement de la roue 28 sont mieux visibles à la figure 3.

La roue 28 comprend un moyeu 38 portant une rangée annulaire de pales 40 à sa périphérie. Elle comprend également des moyens de liaison 42 à la ligne d'arbre 36. Ces moyens de liaison 42 sont logés dans le moyeu 38 et sont ici formés d'une seule pièce avec ce dernier. Les moyens de liaison comprennent un alésage 43 traversant et s'étendant le long de l'axe A de rotation de la roue. Les pales 40 sont également formées d'une seule pièce avec le moyeu 38. La roue 28 est ainsi monobloc.

La ligne d'arbre 36 comprend plusieurs éléments : un arbre principal 44, un second arbre ou tronçon d'arbre appelé « arbre à casser » 46, des roulements 48, un fourreau 50, et des pièces annexes telles qu'un flasque, une rondelle de précharge, de la visserie, etc.

L'arbre principal 44 comprend une extrémité qui traverse l'alésage 43 et comprend des moyens d'accouplement en rotation qui coopèrent avec les moyens de liaison 42 de la roue 28.

L'extrémité opposée de l'arbre principal 44 reçoit une extrémité de l'arbre à casser 46 qui comprend une portion 46' de plus faible diamètre formant une partie fusible du type précité. Cette portion 46' s'étend dans un plan P1, radial ou transversal par rapport à l'axe de rotation de la roue 28, qui est éloigné d'un plan P2 parallèle passant sensiblement par les pales 40 de la roue du ventilateur.

L'arbre principal 44 est centré et guidé en rotation par les roulements 48 dans le fourreau 50 qui entoure une partie du tronçon 44 et de l'arbre à casser 46 et qui est monté dans un orifice 52 du corps 30 du ventilateur 16.

Comme expliqué dans ce qui précède, cette technologie est complexe et présente des inconvénients liés au fait que la fonction de sécurité est prévue sur la ligne d'arbre 36 par l'intermédiaire de l'arbre à casser 46.

L'invention apporte une solution grâce à une roue à casser de ventilateur qui remplace l'arbre à casser et permet de simplifier la ligne d'arbre d'entraînement de la roue du ventilateur.

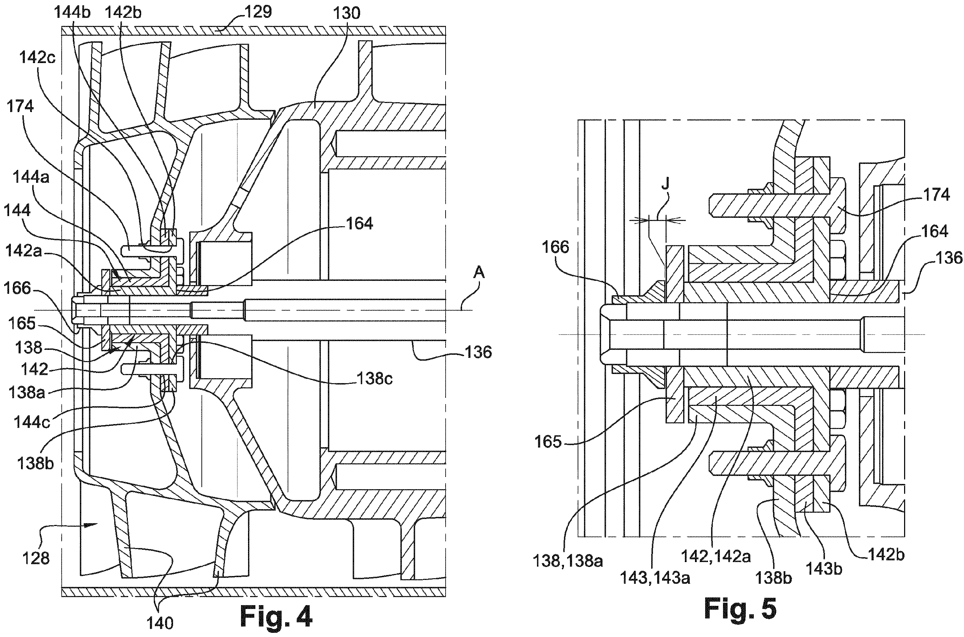

Les figures 4 et 5 représentent un mode de réalisation de l'invention. Ces figures montrent une roue 128 de ventilateur et sa ligne d'arbre d'entraînement qui peut comprendre essentiellement un arbre d'entraînement 136.

Bien que le reste du ventilateur ne soit pas décrit dans ce qui suit, on pourra se référer aux caractéristiques du ventilateur décrit dans ce qui précède et représenté aux figures 1 à 3 pour avoir un exemple d'intégration de la roue 128.

L'arbre 136 comprend au moins deux portions cylindriques de diamètres différents et qui sont reliées l'une à l'autre par un épaulement cylindrique 164. La portion de l'arbre 136 de plus petit diamètre est entourée par la roue 128 et comprend un filetage externe à son extrémité libre, sur lequel est destiné à être vissé un écrou 166.

La roue 128 comprend un moyeu 138 portant une rangée annulaire de pales 140 à sa périphérie.

La roue 128 est montée sur l'arbre 136 par l'intermédiaire de moyens de liaison fusible, qui comprennent deux douilles : une première douille 142 dite de fixation et une seconde douille 143 dite d'usure.

La première douille 142 s'étend le long de l'axe A de rotation de la roue, à l'intérieur du moyeu 138. La douille 142 comprend une portion cylindrique 142a et une portion radiale 142b, c'est-à-dire une portion annulaire s'étendant dans un plan radial ou perpendiculaire à l'axe A. La douille 142 est montée sur la portion de plus petit diamètre de l'arbre 136 de sorte que sa portion cylindrique 142a soit située du côté de de l'écrou 166. La douille 142 est serrée axialement contre l'épaulement 164 par l'écrou 166, une rondelle (ici radiale) 165 étant intercalée axialement entre l'écrou 166 et la douille 142 (et plus exactement entre l'écrou 166 et l'extrémité libre de la portion cylindrique de la douille 142).

Le diamètre interne de la douille 142 et le diamètre externe de la portion de plus petit diamètre de l'arbre 136 peuvent être choisis pour que la douille soit montée sur l'arbre avec un ajustement serré radialement, c'est-à-dire sans jeu radial. Le serrage axial de la douille 142 sur l'arbre 136 suffit à permettre la transmission d'un couple de rotation entre l'arbre et la douille. Il est toutefois possible de compléter cet accouplement par des cannelures externes sur la portion de plus petit diamètre de l'arbre 136 et des cannelures internes complémentaires dans la portion cylindrique 142a de la douille 142.

La portion radiale 142b de la douille 142 comprend une rangée annulaire d'orifices axiaux 142c traversants de passage de vis 174 à la fois fusibles et de fixation de la douille 142 à la roue 128, et donc de la roue 128 à l'arbre 136.

La seconde douille 143 s'étend le long de l'axe A de rotation de la roue, autour de la douille 142 et à l'intérieur du moyeu 138. La douille 143 comprend une portion cylindrique 143a et une portion radiale 143b. La douille 143 est montée sur la douille 142 de sorte que sa portion cylindrique 143a soit située du côté de l'écrou 166. Les portions 143a, 143b de la douille 143 sont donc appliquées respectivement radialement et axialement sur les portions 142a, 142b de la douille 142.

La portion radiale 143b de la douille 143 comprend une rangée annulaire d'orifices axiaux 143c traversants alignés avec les orifices 142c pour le passage des vis 174. La douille 143, et plus particulièrement sa portion radiale 143b, est serrée axialement contre la douille, et plus particulièrement sa portion radiale 142b, par les vis de fixation 174.

Le diamètre interne de la portion 143a de la douille 143 et le diamètre externe de la portion 142a de la douille 142 peuvent être choisis pour que la douille 143 soit montée sur la douille 142 avec un ajustement serré radialement, c'est-à-dire sans jeu radial.

Le moyeu 138 de la roue comprend une portion cylindrique 138a et une portion radiale 138b, la portion cylindrique 138a étant située du côté de de l'écrou 166.

La roue 138 est montée autour de la douille 143 de sorte que ses portions 138a, 138b soient appliquées respectivement radialement et axialement sur les portions 143a, 143b de la douille 143.

La portion radiale 138b de la roue 138 comprend une rangée annulaire d'orifices axiaux 138c traversants alignés avec les orifices 142c, 143c pour le passage des vis 174. La roue 138, et plus particulièrement sa portion radiale 138b, est serrée axialement contre la douille 143, et plus particulièrement sa portion radiale 143b, par les vis de fixation 174.

Le diamètre interne de la portion 138a de la roue et le diamètre externe de la portion 143b de la douille 143 peuvent être choisis pour que la roue 138 soit montée sur la douille avec un ajustement serré radialement, c'est-à-dire sans jeu radial.

Comme on le voit mieux à la figure 5, les extrémités libres des portions cylindriques 143a, 138a de la douille 143 et du moyeu 138 sont séparées d'un jeu axial J de la rondelle 165 de sorte que le serrage axial du moyeu sur les douilles soient obtenu uniquement par les vis 174 (et non pas également par l'écrou 166) et que la roue 128 soit fixée à l'arbre 136 uniquement par ces vis 174.

Dans l'exemple représenté, les vis 174 ont leurs têtes appliquées contre la paroi radiale 142a de la douille 142, et reçoivent un écrou serré contre la paroi radiale 138b du moyeu 138. Les vis sont par exemple au nombre de trois et régulièrement réparties autour de l'axe A.

Chaque vis 174 est de préférence montée sans jeu radial dans les orifices 142c, 143c et 138c. Pour cela, ces orifices peuvent être réalisés simultanément par perçage au moyen d'un foret dont le diamètre est égal au diamètre de la partie filetée de la vis.

Il s'agit de vis 174 fusibles c'est-à-dire qu'elles sont configurées pour se rompre, et se scinder en deux parties, lorsqu'elles sont soumises à un cisaillement supérieur à un certain seuil. Ce seuil de cisaillement et le nombre de vis sont déterminés en fonction d'un seuil de couple transmis par l'arbre au-delà duquel une rupture des vis est recherchée. Pour cela, elles peuvent comprendre une zone de faiblesse et d'amorce de rupture, par exemple sous la forme d'un amincissement de section, c'est-à-dire une réduction locale de diamètre.

Lorsque le couple de rotation transmis par l'arbre 136 est supérieur au seuil prédéterminé, les vis 174 vont se rompre et entraîner une désolidarisation de la roue 128 de l'arbre 136. La douille 142 est maintenue axialement serrée par l'écrou 166 contre l'épaulement 164 de l'arbre 136, et reste donc solidaire de l'arbre. L'arbre 136 peut être amené à tourner encore pendant une certaine durée et par exemple trois heures, alors que la roue peut rester immobile. Pendant cette rotation, la douille d'usure 143 est apte à s'user par frottement et/ou échauffement pour éviter un grippage ou soudage de la douille 142 et du moyeu 136.

Dans le cas où la douille 143 disparaîtrait au moins en partie, et par exemple au bout des trois heures, la roue serait susceptible de tomber. Si l'axe A est vertical, la roue pourrait tomber sur le corps 130 du ventilateur. Si l'axe A est horizontal, la roue pourrait tomber sur la portion de plus grand diamètre du pavillon 129 du corps du ventilateur car le jeu radial entre la roue et le pavillon (par exemple de l'ordre de 0,3mm) est de préférence inférieur à l'épaisseur radiale de la douille 143. L'arbre 136 pourrait continuer à tourner pendant trois heures.

Par exemple, le moyeu 138 et les pales 140 sont réalisées en aluminium et l'arbre 138 est réalisé en acier inoxydable. La douille 142 peut être réalisée en métal (par exemple en acier inoxydable) et la douille 143 est de préférence réalisée en matériau plastique, choisi par exemple parmi : PEEK GL30 ou PEEK CA30, POM-C, PA66, VESPEL®, ULTEM®, etc.

Dans le but de garantir l'alignement entre la roue 128 et les douilles 142, 143, l'assemblage et la fixation par les vis 174 peuvent être réalisés après une première étape d'ébauche de la roue, et avant une étape d'usinage de la roue.

Dans une variante non représentée, les vis 174 pourraient être remplacées par des rivets, également fusibles.

## Revendications

1. Ventilateur (16), en particulier pour un groupe de refroidissement d'aéronef, comportant :
- une roue (128) comprenant un moyeu (138) et une rangée annulaire de pales (140),
- une ligne d'arbre (136) d'entraînement de la roue autour d'un axe (A), et
- des moyens de liaison fusible du moyeu de la roue à la ligne d'arbre, ces moyens de liaison fusible comportant une première douille de fixation (142) traversée par la ligne d'arbre et entourée par ledit moyeu, et des éléments fusibles (174) de sécurité qui s'étendent parallèlement audit axe (A) et sont configurés pour se rompre et désolidariser en rotation la roue de la ligne d'arbre lorsqu'un couple d'entraînement de la roue transmis par ladite ligne d'arbre dépasse un certain seuil,
**caractérisé en ce que** lesdits moyens de liaison comprennent une seconde douille d'usure (143) qui est intercalée entre ladite première douille et ledit moyeu et qui est traversée par lesdits éléments fusibles, ladite seconde douille étant réalisée dans un matériau différent de celui de la première douille et susceptible de s'user par frottement et/ou par échauffement dans le cas où la ligne d'arbre continuerait de tourner suite à la désolidarisation précitée.

2. Ventilateur (16) selon la revendication 1, dans lequel ladite seconde douille (143) comprend une portion cylindrique (143a) et une portion radiale (143b), la portion cylindrique de la seconde douille étant intercalée entre des portions cylindriques (142a, 138a) de la première douille (142) et du moyeu (138), et la portion radiale de la seconde douille étant intercalée entre des portions radiales (142b, 138b) de la première douille et du moyeu.

3. Ventilateur (16) selon la revendication 1 ou 2, dans lequel lesdits éléments fusibles sont des vis (174) et assurent la fixation de la roue (128).

4. Ventilateur (16) selon la revendication 3, en dépendance de la revendication 2, dans lequel les vis (174) traversent axialement les portions radiales (142b, 143b, 138b) des première et seconde douilles (142, 143) et du moyeu (138).

5. Ventilateur (16) selon la revendication précédente, dans lequel les vis (174) traversent sensiblement sans jeu des orifices axiaux (142c, 143c, 138c) des portions radiales (142b, 143b, 138b) des première et seconde douilles (142, 143) et du moyeu (138).

6. Ventilateur (16) selon l'une des revendications précédentes, dans lequel ladite première douille (142) est maintenue serrée axialement contre un épaulement (164) de la ligne d'arbre (136) par un écrou (166) vissé à une extrémité de la ligne d'arbre.

7. Ventilateur (16) selon la revendication précédente, en dépendance de la revendication 5, dans lequel ledit écrou (166) prend appui axialement sur une rondelle (165) qui prend elle-même appui axialement sur la portion cylindrique (142a) de la première douille (142), cette rondelle étant séparée par un jeu axial (J) des portions cylindriques (143a, 138a) de la seconde douille (143) et du moyeu (138).

8. Ventilateur (16) selon l'une des revendications précédentes, dans lequel ladite première douille (142) est en métal et ladite seconde douille (143) est en matériau plastique.

9. Groupe de refroidissement d'aéronef, comportant un échangeur de chaleur, par exemple air-huile, et un ventilateur (16) selon l'une des revendications précédentes.

## Patentansprüche

1. Lüfter (16) insbesondere für Luftfahrzeugkühlaggregat, das umfasst:
- ein Rad (128), das eine Nabe (138) und eine ringförmige Reihe von Schaufeln (140) umfasst,
- einen Wellenstrang (136) zum Antreiben des Rades um eine Achse (A), und
- Mittel zur schmelzbaren Verbindung der Nabe des Rades mit dem Wellenstrang, wobei diese schmelzbaren Verbindungsmittel eine erste Befestigungshülse (142) umfassen, die von dem Wellenstrang durchquert wird und von der Nabe umgeben ist, und schmelzbare Sicherheitselemente (174), die sich parallel zu der Achse (A) erstrecken und dazu konfiguriert sind, zu brechen und das Rad von dem Wellenstrang in Drehung zu trennen, wenn ein Antriebsdrehmoment des Rades, das von dem Wellenstrang übertragen wird, einen bestimmten Schwellenwert überschreitet,
**dadurch gekennzeichnet, dass** die Verbindungsmittel eine zweite Verschleißhülse (143) umfassen, die zwischen der ersten Hülse und der Nabe eingefügt ist und die von den schmelzbaren Elementen durchquert wird, wobei die zweite Hülse aus einem Material hergestellt ist, das von dem der ersten Hülse unterschiedlich ist und durch Reibung und/oder durch Erhitzen in dem Fall, dass der Wellenstrang im Anschluss an das oben erwähnte Trennen weiter dreht, abgenutzt werden kann.

2. Lüfter (16) nach Anspruch 1, wobei die zweite Hülse (143) einen zylindrischen Abschnitt (143a) und einen radialen Abschnitt (143b) umfasst, wobei der zylindrische Abschnitt der zweiten Hülse zwischen zylindrischen Abschnitten (142a, 138a) der ersten Hülse (142) und der Nabe (138) eingefügt ist, und der radiale Abschnitt der zweiten Hülse zwischen radialen Abschnitten (142b, 138b) der ersten Hülse und der Nabe eingefügt ist.

3. Lüfter (16) nach Anspruch 1 oder 2, wobei die schmelzbaren Elemente Schrauben (174) sind und die Befestigung des Rades (128) sicherstellen.

4. Lüfter (16) nach Anspruch 3, in Abhängigkeit von Anspruch 2, wobei die Schrauben (174) die radialen Abschnitte (142b, 143b, 138b) der ersten und der zweiten Hülse (142, 143) und der Nabe (138) axial durchqueren.

5. Lüfter (16) nach dem vorstehenden Anspruch, wobei die Schrauben (174) im Wesentlichen ohne Spiel axiale Öffnungen (142c, 143c, 138c) der radialen Abschnitte (142b, 143b, 138b) der ersten und der zweiten Hülse (142, 143) und der Nabe (138) durchqueren.

6. Lüfter (16) nach einem der vorstehenden Ansprüche, wobei die erste Hülse (142) axial gegen eine Schulter (164) des Wellenstrangs (136) von einer Mutter (166), die an einem Ende des Wellenstrangs angeschraubt ist, eingespannt gehalten wird.

7. Lüfter (16) nach dem vorstehenden Anspruch, in Abhängigkeit von Anspruch 5, wobei die Mutter (166) axial auf einer Unterlegscheibe (165) aufliegt, die selbst axial auf dem zylindrischen Abschnitt (142a) der ersten Hülse (142) aufliegt, wobei diese Unterlegscheibe durch ein axiales Spiel (J) der zylindrischen Abschnitte (143a, 138a) der zweiten Hülse (143) und der Nabe (138) getrennt ist.

8. Lüfter (16) nach einem der vorstehenden Ansprüche, wobei die erste Hülse (142) aus Metall besteht, und die zweite Hülse (143) aus Kunststoff besteht.

9. Luftfahrzeugkühlaggregat, das einen Wärmetauscher, zum Beispiel Luft-Öl, und einen Lüfter (16) nach einem der vorstehenden Ansprüche umfasst.

## Claims

1. A fan (16), in particular for an aircraft cooling unit, comprising:
- a wheel (128) comprising a hub (138) and an annular row of blades (140),
- a shaft assembly (136) for driving the wheel around an axis (A), and
- fusible means for connecting the hub of the wheel to the shaft assembly, these fusible connecting means comprising a first fixing sleeve (142) through which the shaft assembly passes and surrounded by said hub, and fusible safety elements (174) which extend parallel to said axis (A) and are configured to break and to disengage the wheel from the shaft assembly in rotation when a driving torque of the wheel transmitted by said shaft assembly exceeds a certain threshold,
**characterised in that** said connecting means comprise a second wearing sleeve (143) which is interposed between said first sleeve and said hub and through which said fusible elements pass, said second sleeve being made of a material which is different from that of the first sleeve and subject to wear by friction and/or by heating if the shaft assembly continues to rotate following the aforementioned disengagement.

2. The fan (16) according to claim 1, wherein said second sleeve (143) comprises a cylindrical portion (143a) and a radial portion (143b), the cylindrical portion of the second sleeve being interposed between cylindrical portions (142a, 138a) of the first sleeve (142) and the hub (138), and the radial portion of the second sleeve being interposed between radial portions (142b, 138b) of the first sleeve and the hub.

3. The fan (16) according to claim 1 or 2, wherein said fusible elements are screws (174) and ensure the fixing of the wheel (128).

4. The fan (16) according to claim 3, in dependence on claim 2, wherein the screws (174) axially pass through the radial portions (142b, 143b, 138b) of the first and second sleeves (142, 143) and the hub (138).

5. The fan (16) according to claim 1, wherein the screws (174) pass through with substantially no clearance axial orifices (142c, 143c, 138c) of the radial portions (142b, 143b, 138b) of the first and second sleeves (142, 143) and the hub (138).

6. The fan (16) according to one of the preceding claims, wherein said first sleeve (142) is held clamped axially against a shoulder (164) of the shaft assembly (136) by a nut (166) screwed on one end of the shaft assembly.

7. The fan (16) according to the preceding claim, in dependence on claim 5, wherein said nut (166) bears axially on a washer (165) which itself bears axially on the cylindrical portion (142a) of the first sleeve (142), this washer being separated by an axial clearance (J) from the cylindrical portions (143a, 138a) of the second sleeve (143) and of the hub (138).

8. The fan (16) according to one of the preceding claims, wherein said first sleeve (142) is made of metal and said second sleeve (143) is made of plastic material.

9. An aircraft cooling unit, comprising a heat exchanger, e.g. air-oil, and a fan (16) according to one of the preceding claims.
